# EUROPEAN PATENT APPLICATION

(11) **EP 1 705 905 A2**
(43) Date of publication of application: **27.09.2006**
(21) Application number: 05021901.3
(22) Date of filing: 07.10.2005
(51) Int. Cl.: H04N 5/445

(54) **Method for presenting electronic program guide**

(30) Priority: 21.03.2005 CN 200510055755
(71) Applicant: TECO Electric & Machinery Co., Ltd., Taipei City 104 (TW)
(72) Inventor: Wang, Houng-Jyh, Taipei City 104 (TW); Wang, Yi-Chun, Taipei City 104 (TW); Huang, Yao-Ching, Taipei City 104 (TW)
(74) Representative: TER MEER - STEINMEISTER & PARTNER GbR

(57) **Abstract**

A multi-page electronic program guide displays the program information for only one selected channel on each screen. The names of various channels are labeled in channel cells at the left side of the screen when the program information of the selected channel is displayed on the major screen. Thereby, the user can select other channels from the channel cells. Once a specific channel is selected, the program displayed in various time zones are completely displayed on one screen.

## Description

### BACKGROUND OF THE INVENTION

### Field of Invention

The present invention relates in general to a television, and more particularly, to a method of presenting an electronic program guide on a television screen in a multi-channel television broadcasting system.

### Description of the Prior Art

In the conventional analog television (ATV) broadcasting system, auxiliary text information is transmitted during the vertical blanking interval (VBI) of the audio and video signals. The auxiliary signal is mainly used to generate an electronic program guide (EPG) served as a reference for the TV users to select desired programs. However, the auxiliary information cannot be displayed directly because it is transmitted intermittently and has to be stored and accumulated up to a complete set of information before it launches the process of displaying. Therefore, the auxiliary information can be presented in different ways by various compiling logics.

The typical analog television broadcasting system uses a bandwidth of 6MHz to transmit the program of one channel. When such a bandwidth is used for transmitting digital compressed signals, the transmission rate can reach as fast as 19 Mbps. By the currently available MPEG (Motion Picture Experts Group) compression scheme, the transmission of an audio and video program can be achieved by merely a transmission rate of 6Mbps. That means, the bandwidth of 6MHz can be used to transmit programs of three or four channels at once.

Therefore, the digital transmission not only allows a television station to transmit programs of multiple channels within a standard bandwidth, but also allows exuberant auxiliary information to be transmitted with the programs. The auxiliary information, which includes but is not limited to weather report and stock market information, is also called data broadcasting. Consequently, the most obvious advantage of the digital television broadcasting (digital TV, DTV) system is that the TV users can access three or four more times of broadcasting channels than before. As a result, the TV user relies more and more heavily on the electronic program guide and utilizes the electronic program guide more and more often. Therefore, the presentation of the electronic program guide has become a very important issue for television manufacturers and designers, who strive to design electronic program guides that are more convenient to use.

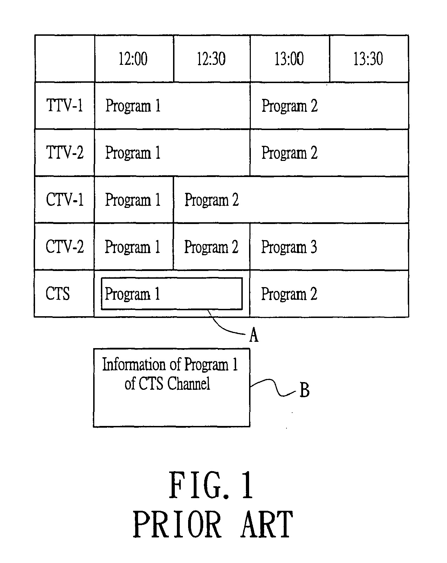

Please refer to Fig.1, which shows a method for presenting an electronic program guide according to the prior art. The conventional method is to present the electronic program guide as a table, as shown in Figure 1. Listed in cells of the table are a plurality of programs of multiple channels broadcasted at the same time zone or multiple time zones. A selection cursor A, in the form of a frame, has a specific color different from that of the electronic program guide. By moving the selection cursor A to a desired cell, the user is able to select a program, then program description B of the program of the specific cell is displayed in an additional or popup window. Because such type of electronic program guide displays programs of multiple channels in a single page, excessive words often cause difficulty in program/channel selection. What is more, since the program information of each channel in the electronic program guide is obtained from signals transmitted from the supply channel, the latest program information cannot be retrieved until each specific channel in the electronic program guide is selected. That means, when a specific channel has not been selected for a few days, the program information of the specific channel remains the same as it was received when the specific channel was last selected. If this program information has been updated very recently, the program information of the specific channel shown in the electronic program guide will be out-of-date and different from the actual broadcasting. Furthermore, the window B of a channel may become blank if the channel has not been selected for a period of time, longer than the given period of time the upcoming program information was received when the channel was previously selected (for example: The information of programs next week was received at one point. However if the user has not selected that channel for more than one week after that point, the above situation will occur).

In US Patent No. 6,763,522, an alternate electronic program guide is presented. As shown in Fig.2 of this patent, a multi-page presentation mode is adapted. On the first page, names of major channels are labeled at the left-hand column as an index. Only when a specific major channel is selected will the detailed list of programs currently broadcasted on subordinate channels be displayed on the sub page. For example, only the names of the major channels X, Y and Z are displayed on the front page. The names and currently broadcasted programs of channels X1, X2 and X3, which belong to the X major channel, will not be displayed on the sub page until the major channel X is selected. In comparison with the single-page presentation mode electronic program guide, this type of electronic program guide is less complicated. However, such type of electronic program guide can only display information of programs currently broadcasted. In other words, the user can only receive information of programs within the present time zone but cannot preview programs in the future time zones.

### SUMMARY OF THE INVENTION

A presentation of an electronic program guide is provided, allowing the user or audience of the television to retrieve the program information provided by various channels listed in multiple pages. Each page includes the programs broadcasted by a single channel at various time zones, so that the texts required for each page are reduced while the sufficient program information is still provided. The user can acquire the program information of various channels simply and intuitively by turning pages when selecting the channels cells labeled with various channels.

Preferably, the program information displayed on each page is never outdated or a blank since the program information of a specific channel is displayed only in one page and is updated whenever selected.

In one embodiment, the channel cells labeled with a plurality of channels are in the left-most column. Various time zones are at the top raw of the electronic program guide. When one of the channel cells is selected by a cursor, program names of the channel are displayed in program blocks corresponding to the time zones. When one of the program blocks is selected by the cursor, program information of the selected program is displayed in another block.

### BRIEF DESCRIPTION OF THE DRAWINGS

The present invention will become more fully understood from the detailed description given hereinbelow illustration only, and thus are not limitative of the present invention, and wherein:
Fig.1 shows a method for presenting an electronic program guide according to the prior art;
FIG. 2 shows an embodiment of a presentation of an electronic program guide;
Fig.3 shows the electronic program guide of Fig.2 after channel switch;
Fig.4 shows another embodiment of a presentation of an electronic program guide providing program information of multiple days according to the present invention;
FIG. 5 shows different types of cursors;
Figure 6 shows an operation process of retrieving program information from an electronic program guide according to the present invention; and
FIG. 7 shows an illustration of another embodiment of an electronic program guide according to the present invention.

### DETAILED DESCRIPTION OF THE INVENTION

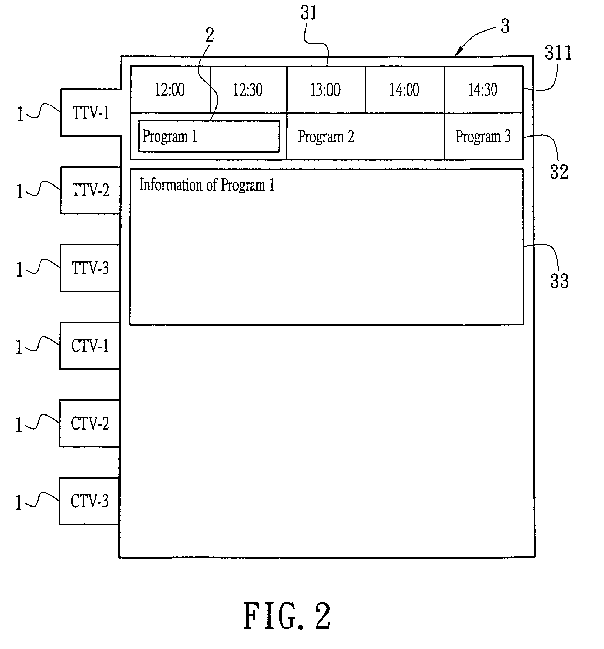

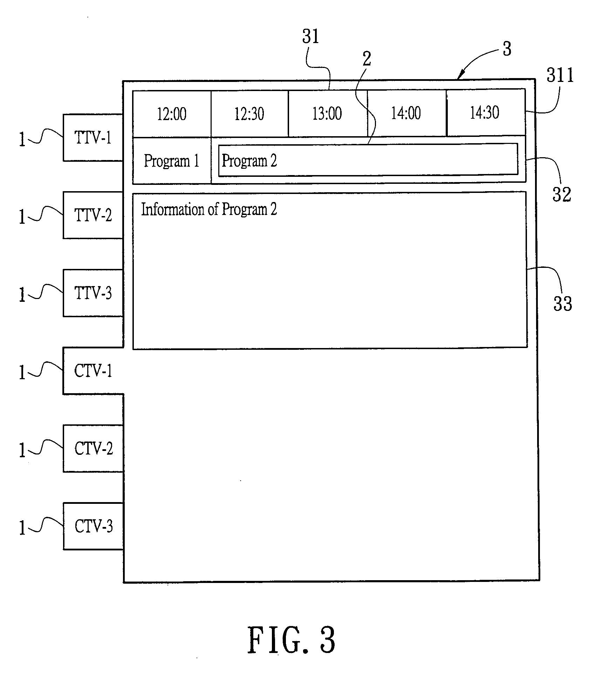

Referring to Figures 2 and 3, Fig.2 shows an embodiment of a presentation of an electronic program guide according to the present invention. Fig.3 shows the electronic program guide of Fig.2 after channel switch. As shown in Fig.2 and Fig.3, the name of each channel is labeled in a leftmost column of the screen by a cell 1. That means, each of the cells 1 comprises a name or a symbol of the channel. By moving up and down a cursor 2 in the form of a frame between the cells 1, the user is allowed to select a desired channel. When the number of channels is too large to be displayed simultaneously, the user can scroll up or down the cell 1 to browse the remaining channels. Each of the cells I is corresponding to a program information page 3 and only the program information of the corresponding cell 1 is displayed on the program information page 3. Therefore, when a specific channel is selected by moving the cursor 2 to the corresponding cell 1, only the program information of the selected channel is displayed on the program information page 3. That means, each of the listed channels has its individual program information page 3, and the plurality of program information pages 3 overlapped with each other. Once a cell 1 is selected, the program information page 3 corresponding to the selected cell 1 is retrieved and displayed as the front page, while the remaining program information pages 3 are covered thereunder.

As shown in Fig.2 and Fig.3, a time zone block 31 is located at the top of each program information page 3 horizontally. Similarly to the column for labeling the channels, the time zone block 31 can be scrolled left and right to accommodates more time zones. Program blocks 32, showing program names corresponding to various time zones, are immediately underneath the time zone block 31. Each of the program blocks 32 can be selected by the cursor 2. After being selected, the brief description of the selected program is displayed in a program information block 33 underneath the program blocks 32 so that the user can acquire the content information of the selected program from the brief program description.

It is worth noting that the time zone block 31 comprises a plurality of cells 311, and each of the cells 311 comprises a specific time different from other cells 311 (for example: 12:00, 12:30, 13:00, ...), as shown in Fig.2 and Fig.3. By laterally extending the program blocks 32 from the cells 311 where the programs start to the cells 311 where the programs end, the program block 32 corresponding to each of the time zones is displayed. At the same time, each of the time zones is defined by aligning the starting and ending edges of the program block 32 with the corresponding cells 311. However, the present invention is not limited to this. The cells 311 of the time zone block 31 may comprise different time periods (for example: 12:00~12:30, 12:30~13:00, ...), or the time period of one cell 311 may be not as long as that of another cell 311 (for example: 12:00~12:30, 12:30~13:30,...). In fact, once the alignment of the cells 311 allows the program block 32 corresponding to each of the time zones to be successfully displayed, it is within the scope of the present invention. In addition, the arrangement of the cells 1, the program blocks 32 and the cells 311 is interchangeable according to actual practice. Under the circumstances, the display logic and principle is still the same. Since only visual effects may be added, it is regarded as an equivalent interchange.

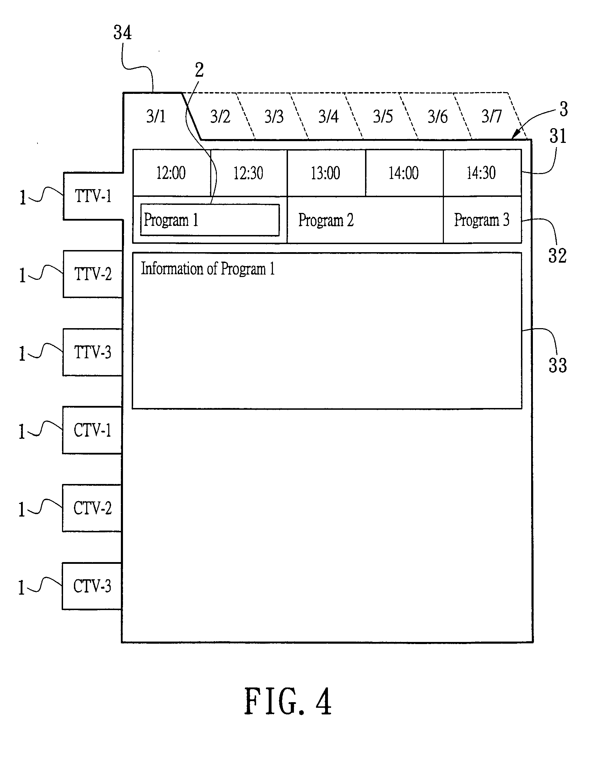

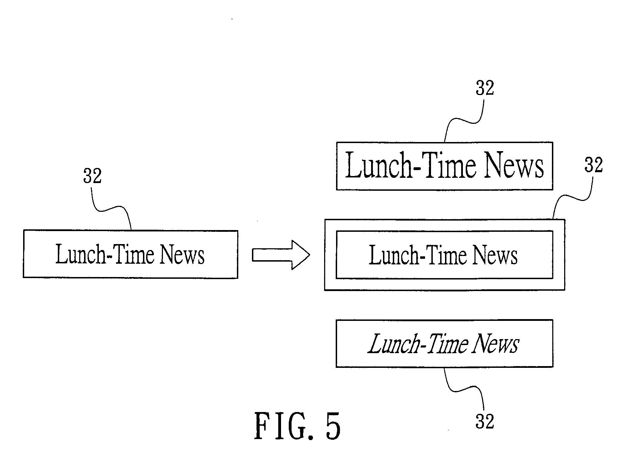

Please refer to Fig.4, which shows another embodiment of a presentation of an electronic program guide providing program information of multiple days according to the present invention. As shown in Figure 4, the program information of multiple days can be provided. A plurality of cells 34 aligned in a row is set up at the top of each program information page 3. Each of the cells 34 is labeled with a date, and the dates are several days from today. In Fig.4, cells 34 labeled with seven days including 3/1 to 3/7 are demonstrated. The cells 34 can be selected by moving the cursor 2 to a specific cell 34 to display the program information of a specific channel on that day. Since the required program information can be accessed by selecting cells vertically and horizontally, it is very simple for anyone to operate. Furthermore, the movement of the cursor 2 can not only be presented by color variation of the frame, but also by enlarging the selected program block 32, changing the font or increasing font size of the texts in the selected program block 32 to enhance the visual effect of the selected block, as shown in Figure 5, which shows different types of cursors. In addition, the shape of the cursor 2 is not limited to a frame. For example, the cursor 2 may be in the form of a triangular frame, an eclipse frame, a polygonal frame, or in the form other than a right-angled frame. The cursor 2 can even be a mark in any format such as "√" as long as it can easily distinguish the select cell from the others. Besides, the date cells 34 can be allocated at other positions of the program information pages 3 and randomly aligned instead of the top row thereof. Once the user can acquire the required program information by selecting cells vertically, horizontally, and simply, it is within the scope of the present invention.

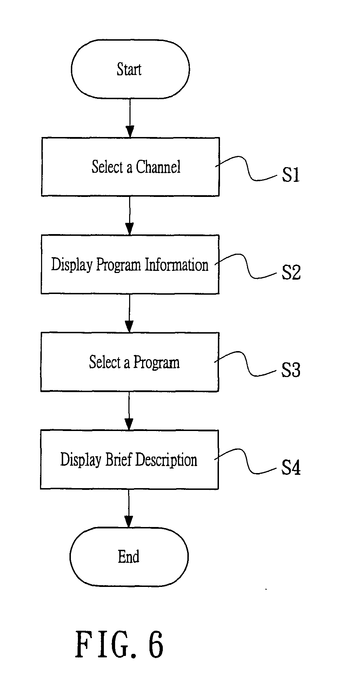

Figure 6 shows an operation process of retrieving program information from an electronic program guide according to the present invention. When the electronic program guide is entered, a channel is selected by moving the cursor 2 to a corresponding cell 1 in step S1. When the channel is selected, the program information page 3 of the selected channel is displayed to show program information in step S2. In step S3, a specific program of the selected channel is selected, so that the brief description of the selected program can be obtained in step S4. The process is very straightforward, logical, and easy for anyone to operate. With only the program information of one channel displayed in each page, the interface is thus simple, clear and easy to understand without many redundant or undesired texts. It is very obvious that the present invention electronic program guide is superior to the prior art electronic program guide.

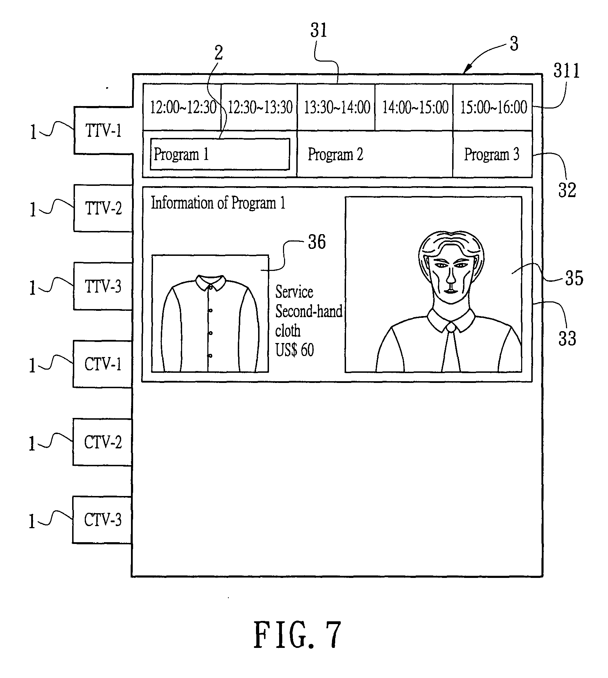

Please refer to Fig.7, FIG. 7 shows a picture of another embodiment of an electronic program guide according to the present invention. In this embodiment, the program and/or information transmitted from television stations can be simultaneously displayed with the brief description of the selected program. The program and/or information transmitted by the television stations comprise the audio/video content, content information related to the selected program, service information of the channel provider, or other information unrelated to the selected program. As shown in Figure 7, when the cursor 2 is utilized to select a specific program block 32, the audio and video content of this program is displayed in an audio and video block 35 popping up within the program information block 33 if the program in this specific program block 32 is currently broadcasted. If the selected program is not the currently broadcasted program, the audio and video block 35 may not pop up, or the audio and video block 35 may be blank. Meanwhile, when the specific program block 32 is selected, the information related and unrelated to the selected program is displayed in an information block 36 within the program information block 33.

Figure 7 shows the example of selecting currently broadcasted noon news. Under the circumstances, not only the picture of a broadcaster broadcasting news is displayed in the audio and video block 35, but also information showing second-hand clothes of the broadcaster in auction is displayed in the information block 36. In this preferred embodiment, the user can watch the currently broadcasted program and acquire various information at the same time after selecting the program, without any overlapping pictures on the screen. It is therefore very convenient for both the users and the TV stations. It is worth noting that time periods are included in the cells 311 of the time zone block 31 in Fig.7.

While the present invention has been particularly shown and described with reference to preferred embodiments thereof, it will be understood by those of ordinary skill in the art the various changes in form and details may be made therein without departing from the spirit and scope of the present invention as defined by the appended claims.

## Claims

1. An electronic program guide having a plurality of pages, each of the pages comprising:
a channel cell being labeled with one of a plurality of channels on one side of the page;
a cursor;
a plurality of time cells aligned in a line perpendicular to the side for defining a plurality of time zones; and
a plurality of program blocks, each of the program blocks being corresponding to one of the time zones for showing a program name of the channel in the corresponding time zone.

2. The electronic program guide of Claim 1, wherein each of the program blocks is selected by the cursor to display program information of a selected program in a program information block in the page.

3. The electronic program guide of Claim 2, wherein the selected program block extends laterally when the program block is selected by the cursor.

4. The electronic program guide of Claim 2, wherein a text font of the program name in the selected program block is changed when the program block is selected by the cursor.

5. The electronic program of Claim 2, wherein a font size of the program name in the selected program block is increased when the program block is selected by the cursor.

6. The electronic program guide of Claim 1, wherein the channel cell of each of the pages is on the left side of the page, and the time cells are at the top raw of the page.

7. The electronic program guide of Claim 1, wherein the channel cell of each of the pages is on the top side of the page, and the time cells are in the leftmost column of the page.

8. The electronic program guide of Claim 1, wherein the cursor is in the form of a frame.

9. The electronic program guide of Claim 1, wherein each of the time cells comprises a time for defining the plurality of time zones.

10. The electronic program guide of Claim 1, wherein each of the time cells comprises a time period for defining the plurality of time zones.

11. The electronic program guide of Claim 1, wherein the page further comprises a plurality of date cells, each of the date cells is labeled with a date, program names of a previously selected channel on the date corresponding to one of the date cells is displayed when the date cell is selected by the cursor.

12. The electronic program guide of Claim 11, wherein the date cells are aligned in a line outside the time cells.

13. The electronic program guide of Claim 1, wherein both the channel cell of each of the pages and the time cells are in a scrollable form.

14. An electronic program guide, comprising:
a plurality of channel cells aligned in a line, each of the channel cells being labeled with one of a plurality of channels;
a cursor, operative to select one of the channel cells to display program information of the selected channel;
a plurality of time cells aligned in a line perpendicular to the channel cells for defining a plurality of time zones; and
a plurality of program blocks, each of the program blocks being corresponding to one of the time zones for showing a program name of only the selected channel in the corresponding time zone.

15. The electronic program guide of Claim 1, wherein each of the program blocks is selected by the cursor to display description of a selected program in a program information block.

16. The electronic program guide of Claim 15, wherein the selected program block extends laterally when the program block is selected by the cursor.

17. The electronic program guide of Claim 15, wherein a text font of the program name in the selected program block is changed when the program block is selected by the cursor.

18. The electronic program of Claim 15, wherein a font size of the program name in the selected program block is increased when the program block is selected by the cursor.

19. The electronic program guide of Claim 14, wherein the channel cells are in the leftmost column of the electronic program guide, and the time cells are at the top raw of the electronic program guide.

20. The electronic program guide of Claim 14, wherein the channel cells are at the top raw of the electronic program guide, and the time cells are in the leftmost column of the electronic program guide.

21. The electronic program guide of Claim 14, wherein the cursor is in the form of a frame.

22. The electronic program guide of Claim 14, wherein each of the time cells comprises a time for defining the plurality of time zones.

23. The electronic program guide of Claim 14, wherein each of the time cells comprises a time period for defining the plurality of time zones.

24. The electronic program guide of Claim 14, further comprising a plurality of date cells, each of the date cells being labeled with a date, program information of a previously selected channel on the date corresponding to one of the date cells being displayed when the date cell is selected by the cursor.

25. The electronic program guide of Claim 24, wherein the date cells are aligned in a line outside the time cells.

26. The electronic program guide of Claim 14, wherein the channel cells are in a scrollable form.

27. The electronic program guide of Claim 14, wherein the time cells are in a scrollable form.

28. A method of presenting an electronic program guide, comprising the following steps:
selecting one channel from a plurality of channels;
displaying a plurality of program names of the selected channel and not displaying program names of unselected channels;
selecting one of the program names; and
displaying program information of the selected program.

29. The method of Claim 28, wherein the step of displaying the program information further comprises displaying program transmitted from television stations.

30. The method of Claim 28, wherein the step of displaying the program information further comprises displaying information transmitted form television stations.
